# EUROPEAN PATENT SPECIFICATION

(11) **EP 2 694 801 B1**
(45) Date of publication and mention of the grant of the patent: **29.08.2018**
(21) Application number: 12715894.7
(22) Date of filing: 04.04.2012
(51) Int. Cl.: F03B 11/00, F03B 17/06

(54) **SUBMERSIBLE APPARATUS AND METHODS OF INSTALLING ANCHORING EQUIPMENT**
TAUCHFÄHIGE VORRICHTUNG UND VERFAHREN ZUR INSTALLATION DER VERANKERUNGSEINRICHTUNG
APPAREIL SUBMERSIBLE ET MÉTHODES D'INSTALLATION D'ÉQUIPEMENT D'ANCRAGE

(30) Priority: 04.04.2011 GB 201105620
(43) Date of publication of application: 12.02.2014
(73) Proprietor: QED Naval Ltd, Edinburgh EH2 3AH (GB)
(72) Inventor: SMITH, Jeremy, Edinburgh EH3 5DN (GB)
(74) Representative: Ellis, Michael James
(86) International application number: PCT/EP2012/056173
(87) International publication number: WO 2012/136709

(56) References cited:
- EP-A2- 1 956 237
- WO-A1-03/029646
- WO-A2-2004/107527
- DE-A1-102008 022 821
- GB-A- 2 001 396
- GB-A- 2 408 778
- GB-A- 2 467 200

## Description

The present invention relates to submersible apparatus, particularly, but not exclusively submersible apparatus for anchoring tidal turbine structures on the sea bed.

In the following description the term "seabed" shall be taken to mean the substantially static ground beneath a body of water and includes for example the ground beneath the sea, the ground beneath a river and the ground beneath an intersection of the two. The term "marine" shall also be construed accordingly.

Marine renewables' have been slow to develop due to very high installation & maintenance costs in comparison to their land based equivalents. These two aspects are important drivers in any economic development of marine renewable energy systems. More specifically the high costs are a result of the requirement for specialist vessels to support the installation and maintenance processes. Similar vessels are required by the offshore oil and gas industry. Therefore, it is often the case that the developer is competing for the same resource. This makes the day rates for chartering vessels very high and can bring the profitability of the development into question. Large fluctuations in the day rates occur with the price of oil making installations and maintenance costs are very difficult to predict. This also introduces a large economic risk which the renewable energy sector can ill afford.

Whilst in service it is almost inevitable that there will be a requirement for resolving Operational & Maintenance (O&M) issues. In a tidal environment, which will typically have been selected for its high energy potential, this is extremely challenging. Tidal streams running at several knots impart very large dynamic forces on the structure, in part due to the turbulence flow around the structure. This often means that support vessels can only operate over a short weather and tidal range spectrum. In many instances, the period of slack water can be as little as ten minutes. Therefore, if there are a lot of underwater operations the duration to complete them can be much longer than anticipated because of the restricted time during which safe operations can be carried out. This results in a massive increase in cost.

The majority of tidal turbine systems being developed are designed to be anchored using a singular monopiled structure where a foundation upright is driven down into the underwater bed; this form of anchoring is not only expensive to install per unit but also yields comparatively low power per unit area of seabed when deployed as an array of turbines since devices must be spaced well apart.

Whenever a fluid in motion comes into contact with a solid boundary, friction between the two mediums cause the fluid to slow down locally and theoretically stop at that boundary. This is called the boundary layer, and it means the velocity of the flow at the surface is significantly faster and less turbulent than that at the seabed. It is for this reason that most tidal energy devices are located at or near the surface. However, tidal streams are affected by waves which can reduce the efficiency of tidal devices at the surface. Waves also impose large fluctuating forces onto structures meaning that the fatigue loads are high thereby reducing the life expectancy of the structure.

When installing any foreign object in a tidal region, the area around it will be subject to a highly erosive environment. This is known as scouring and can undermine foundations like those employed in monopiled structures.

United Kingdom Patent Publication No. GB 2467200 A describes a device which rests on the water bed and which interacts with the boundary layer. This *gravity foundation* is filled with heavy ballast to hold it in position on the sea bed. A current stream energy device configured for being mounted on a sea or river bed is disclosed in GB 2408778 A. According to a first aspect of the present invention there is provided a submersible module according to claim 1. According to a second aspect of the present invention there is provided a method of installing anchoring equipment with respect to a water flow passing over a water bed, according to claim 16. Further features and advantages of the present invention will become apparent from the claims and the following description.

Embodiments of the present invention will now be described by way of example only, with reference to the following diagrams, in which:-
Fig. 1 is an isometric view of an embodiment of the submersible module of the present invention, provided with a vertical axis turbine;
Fig. 2 a partial exploded view of the submersible module of Fig. 1 showing the framework of the underlying support structure;
Fig. 3 is a cross sectional view of the submersible module;
Fig. 4 is a plan view illustrating a plurality of modules connected together to form an array, and where the electrical, mechanical and de-ballasting layout of the array can be seen;
Figs. 5A to 5F are schematic illustrations of a method of deploying the module on a water bed;
Fig. 6 is a schematic representation of a typical incident water pattern over the module;
Fig. 7 is a graph of velocity profile changes over the module;
Fig. 8A illustrates a series of wave surface profiles;
Fig. 8B is a schematic representation of the module installed as a near shore reef;
Figs. 9A to 9D are schematic illustrations of an alternative method of deploying the module on a water bed;
Fig. 10A is an end view of an alternative embodiment of the apparatus illustrating installation or release of an *integrated* buoyancy tower and turbine module;
Fig. 10B is a front view of the apparatus of Fig. 10A;
Fig. 10C is a plan view of an array of the modules of Figs. 10A and 10B connected together;
Fig. 10D is a plan view of the apparatus of Fig. 10C, where a single module is stationed at the water surface for maintenance or repair operations;
Fig. 11A is a front view of the apparatus of Fig. 10D positioned on an uneven water bed;
Fig. 11B is a plan view of the apparatus of Fig. 10C, laterally articulated to take account of its surroundings;
Figs. 12A to 12D are schematic illustrations of a further alternative method of deploying the module on a water bed;
Fig. 13A is a plan view of the apparatus of Fig. 12D after deployment;
Fig. 13B is a front view of the apparatus of Fig. 12D after deployment;
Fig. 14A is a schematic illustration of a further alternative method of deploying the module on a water bed utilising a single catenary;
Fig. 14B is a schematic illustration of a further alternative method of deploying the module on a water bed utilising a double catenary;
Fig. 15A is front view illustrating a yet further method of installing the apparatus; and
Fig. 15B is a plan view of the apparatus of Fig. 15A.

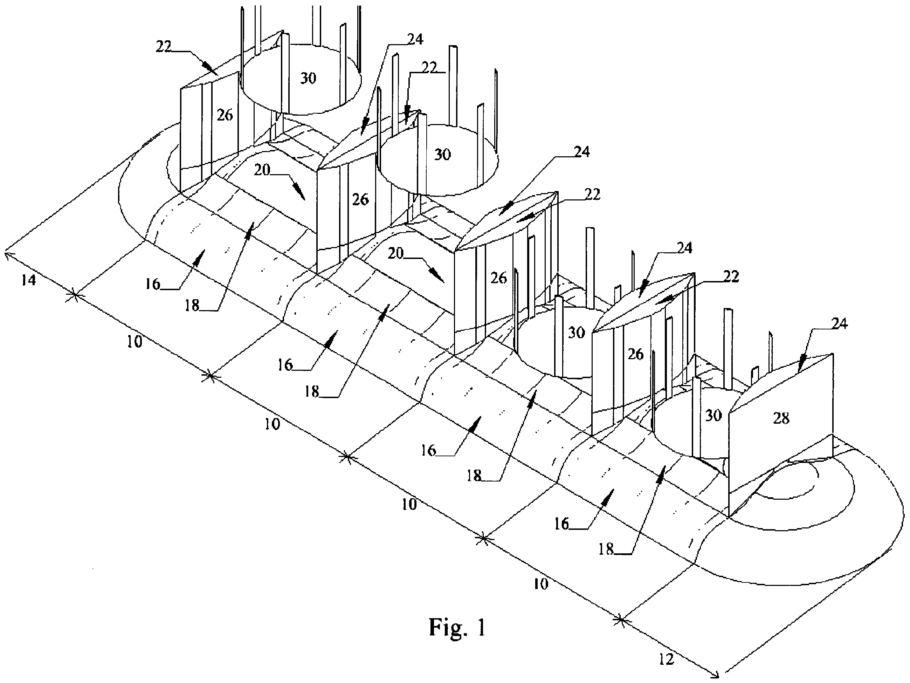

Referring to Fig. 1, each module 10 of a submersible apparatus is connected to form an array having a bow section 12 and a stern section 14 provided at either end of the array. Each module 10 is provided with boundary layer fairings on either side of the module, each boundary layer fairing comprising a scour plate 16 leading on to a vent plate 18. Main hull plates 20 are also provided between the two opposed sets of vent plates 18.

Each scour plate 16 comprises a compliant material which is able to alter its shape to take account of the contours of the water bed along the length of the array. The vent plates 18 are also shaped and positioned to provide a smooth transition of water flow from the scour plates 16. Furthermore, the vent plates 18 are hinged to the module 10 such that they can be actively angled upwards or downwards during installation of the apparatus as will be described subsequently.

The main hull plates 20 are also shaped to provide a continuous upper flow surface from the module's leading to trailing edge. The shape of the scour plates 16, vent plates 18 and main hull plates 20 combine to provide a hydrodynamic surface which optimises flow conditions over the apparatus 10.

A first buoyancy tower 22 is mounted on one side of each module 10 and a second buoyancy tower 24 is mounted on the other side of each module 10. Each buoyancy tower 22, 24 has a contoured face 26 on one side and a flat face 28 on the opposite side. When the modules 10 are joined in an array, the flat faces of the first and second buoyancy towers 22, 24 of each section abut against one another to provide a series of combined buoyancy towers along the length of the array. The buoyancy towers 22, 24 are substantially hollow to provide variable buoyancy to each independent module 10 as will be described subsequently. The buoyancy towers 22, 24 provide a relatively high centre of buoyancy for the overall apparatus which improves stability.

Detachable underwater turbine modules 30 are also provided. The turbine modules 30 are provided with a universal connection to facilitate attachment to each module 10. Each turbine module 30 is positively buoyant such that when released from its associated module 10 it will ascend to the surface for servicing, maintenance, replacement etc. Although vertical axis turbines are illustrated in Fig. 1 these may be replaced with virtually any form of underwater renewable energy device.

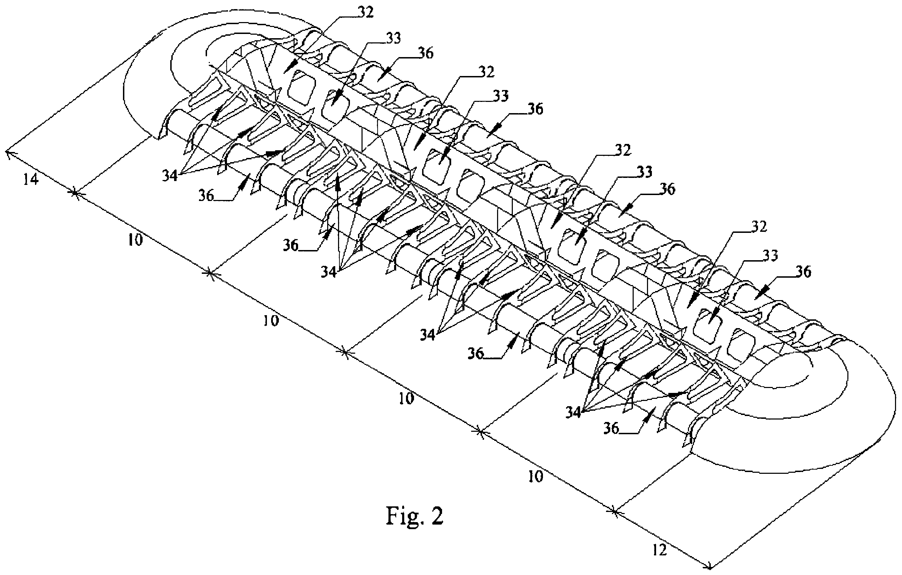

With reference to Fig. 2, the supporting framework of each module 10 will now be described. As can be seen, the sections combine to form an open framework which allows the turbine modules 30 to be plugged into each module 10 and stabilised afloat or on the water bed. For this purpose, tapered sockets 32 are provided along the centre of each module 10. These sockets 32 guide and gradually lock the turbine modules 30 into position on each module 10. Interface panels 33 are also provided in the sockets 32 to facilitate this locking engagement.

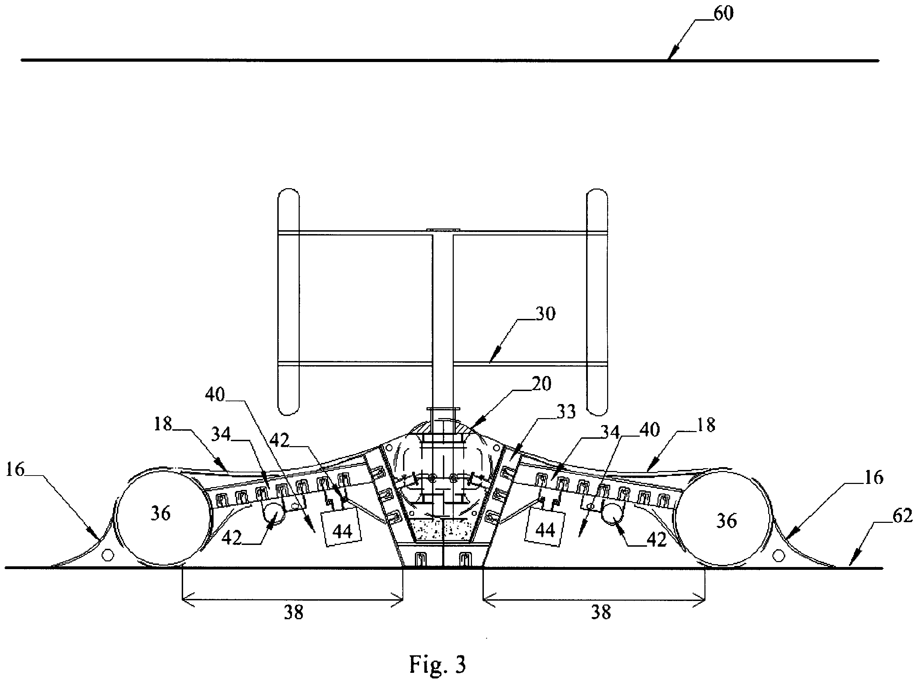

Ribs 34 extend from the centre of each module 10 to provide structural support to the main hull plates 20, vent plates 18 and scour plates 16. The ribs 34 are also hinged with respect the main hull of each module 10 to create a pair of "wings" that are able to hinge up and down in the direction indicated by arrow A in Fig. 3. The ribs 34 also support ballast hull sections 36 provided at each end thereof. Operation of the ballast hull sections 36 will be described subsequently.

With particular reference to Fig. 3, the underlying support framework of each module 10 creates a pair of sheltered zones 38 underneath the array. Within each sheltered zone 38 a "hydroway" arrangement 40 is provided to allow dedicated ROV (Remotely Operated Vehicle) access to system support routes 42 and the interface panels 33. In the present embodiment, each hydroway arrangement 40 is provided with rails 42 that allow an ROV 44 to move therealong between the modules 10 of the apparatus; however, alternative arrangements may be provided.

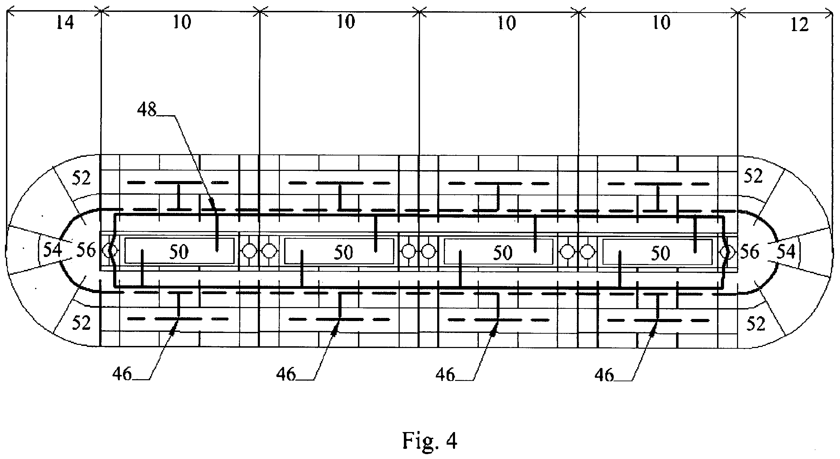

Referring to Fig. 4, the electrical, mechanical and de-ballasting layout of the apparatus according to the present embodiment is described. A ballast pipe arrangement 46 and electrical transmission bus 48 is provided; also shown is a centrally located pressure hull module 50 and mooring and towing compartments 52 which allow the array to hold station whilst on the surface or submerged. Pump rooms 54 control the ballasting system and include air vent pipes to allow the ballast hulls 46 to pressurise for achieving the floating condition and de-pressurise to the submerged condition. There are also ROV garages 56 located at both the bow section 12 and stern section 14 to allow the ROV 44 to be recovered to the surface.

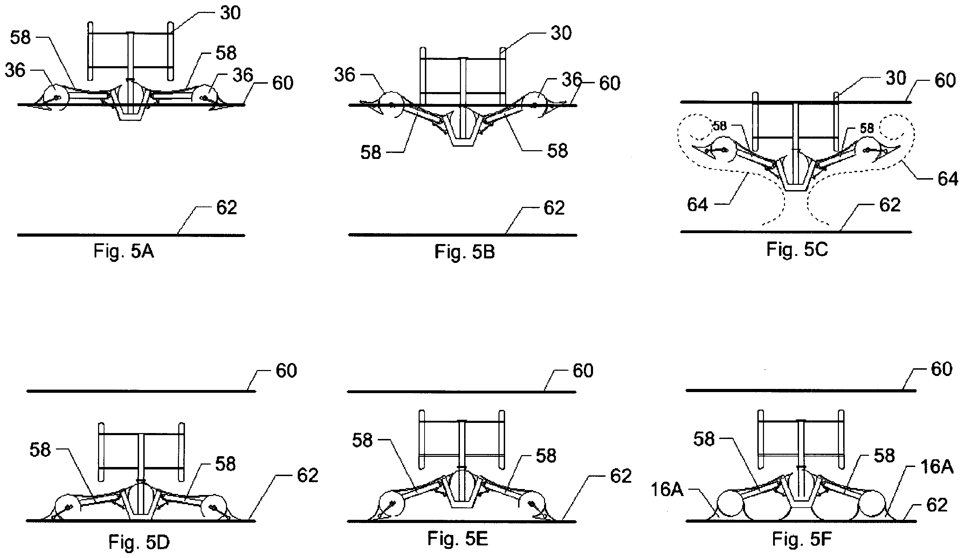

A first method of installing the apparatus on a water bed will now be described with particular reference to Figs 5A to 5F. In the following description, it will be understood that the ability of hinged spars 24 to move the boundary layer fairing of the array upwards and downwards creates a pair of "wings" generally designated 58.

An array of submersible modules 10 are first towed to a suitable location for deployment. As shown in Fig. 5A, in a transit mode, the pair of wings 58 are hinged such that the ballast hull sections 36 are level with the main hull of the module 10. This stabilises the array in the water. In an installation mode, once in position on the water surface 60 over an appropriate location on the water bed 62, the wings 58 are then actuated into a swept-up configuration as shown in Fig. 5B thereby lowering the main hull of the modules 10 to below the water surface 60.

The ballast hull sections 36 are now flooded with the surrounding water and the array will begin to sink toward the water bed 62. As shown in Fig. 5C, in a dive mode, as the array descends toward the water bed 62, the swept-up configuration of the wings 58 ensures that the incident flow of water resulting from the descent will flow around each module 10 in a controlled fashion (see illustrative streamline pattern depicted by dashed lines 64). The streamlines and viscous effects of the flow 64 therefore stabilise each module 10 as the array descends into the water.

In addition to sweeping-up the wings 58, the vent plates 18 may also be opened during descent of the array in order to allow otherwise "trapped" water underneath each module 10 to vent therethrough. As well as providing further stabilisation during the descent, this also allows the speed of descent to be increased by reducing resistance and "parachuting" effects.

Referring to Fig. 5D, in an installed mode, once the array is at or near the water bed 62 the wings 58 of each module 10 are levelled with the main hull to allow the array to settle on the water bed 62. In order to level each module 10 on the (typically uneven) water bed 62, each wing 58 can be independently cranked up to level each module 10 with respect to the expected water current and or water bed 62 thereby entering an operational mode, depicted in Fig. 5E. As shown in Fig. 5F, compliant scour plates 16A may be provided on the ballast sections 36 to create a suction effect on the water bed 62 below.

Operation of the submersible apparatus of the present invention, when installed on the water bed 62, will now be described.

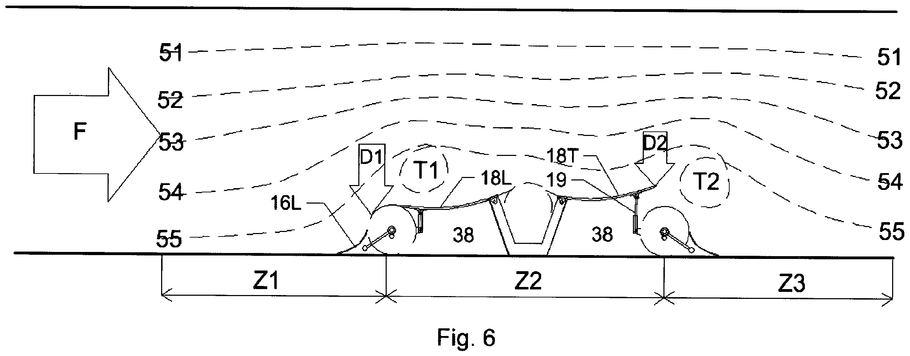

Referring to Fig. 6, the in-situ prevailing free-stream water flow is represented by arrow F. For illustrative purposes, the flow of water over each module 10 is depicted by streamlines S1 to S5 in Fig. 6. Furthermore, purely for reference purposes, in Fig. 6 the flow is divided into zones Z1, Z2 and Z3. As the flow F enters region Z1, it begins to shape in preparation for passing over the module 10.

As the flow F reaches the end of region Z1, the boundary layer region (approximated as the depth within which S4 and S5 lie) begins to pass over the leading edge scour plate 16L and onto the leading edge vent plate 18L. A region of turbulent flow illustrated as T1 is also created. A component of the flow is therefore effectively forced upwards by the leading edge of the module 10. An opposite downward force is therefore imparted on the leading edge of the module 10 represented by D1 in Fig. 6. In addition, the flow is also forced to accelerate over the module 10 which increases the power that can be harvested by the turbine module (power increases as squared function of velocity).

After passing the turbulent flow T1, the flow then smoothly continues over the remainder of the leading edge vent plate 18L, the main hull plate 20, and onto the trailing edge vent plate 18T (which is raised on piston 19). As the flow leaves zone Z2, it leaves the trailing edge of the vent plate 18T thereby creating a second area of turbulent flow T2 immediately downstream of the trailing edge vent plate 18T. This creates a "spoiler" effect which effectively forces a component of the flow upwards. An opposite downward force is therefore imparted on the trailing edge of the module 10 represented by D2 in Fig. 6.

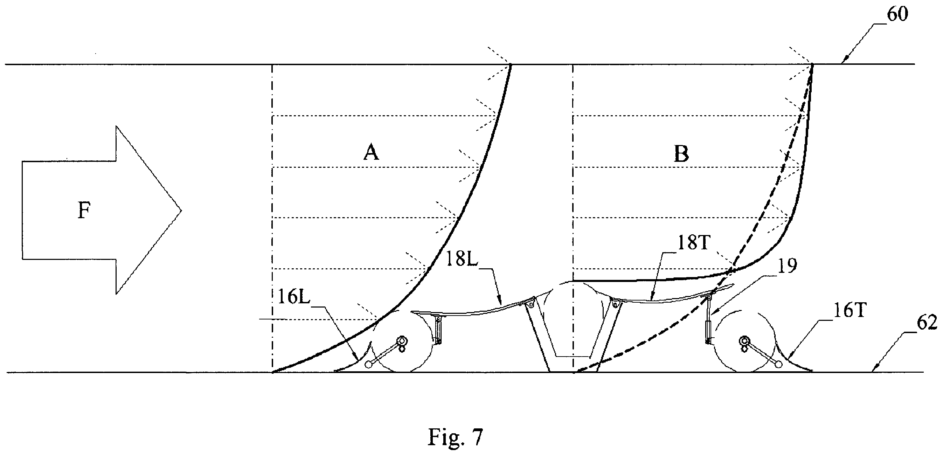

An effect of installing the array on the water bed is to increase the velocity of the flow above it. With reference to Fig. 7, it can be seen that the free stream velocity profile A increases significantly as the flow passes over the apparatus at B.

The components of downforce, D1 and D2, provide significantly increased stability of the array on a water bed. Furthermore, the sheltered zone 38 provides shelter from strong current in order to facilitate underwater operations *throughout the tidal range.*

The increased stability generated by the downforce D1, D2 avoids or reduces the requirement for other, more expensive and time consuming means of restraining such systems to the water bed.

In addition, the modular arrangement described means that if a problem develops with one of the modules or turbines during operation, rather than re-float the whole array, the individual turbine can be released to the surface. This can be done by releasing all essential electrical and control systems from the turbine modules (using the ROV 44 or the automated, hydraulically operated system interface panel 33). This allows that individual turbine module to independently float to the surface whilst tethered to the main array.

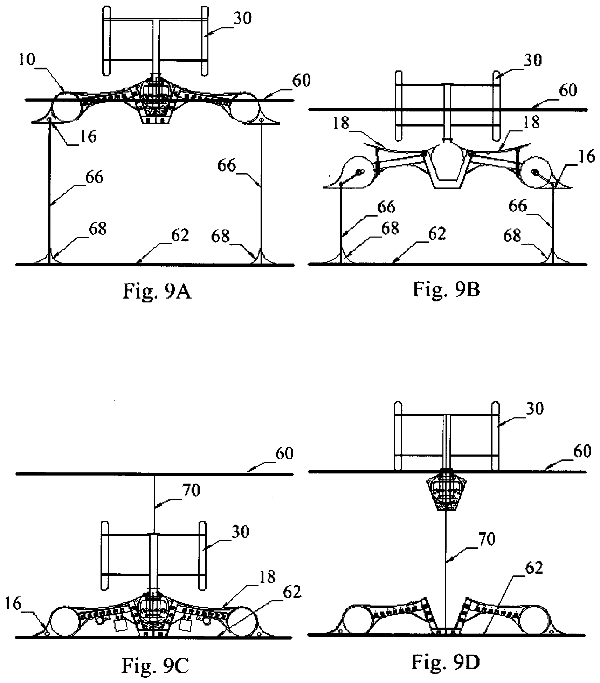

An alternative method of installing an array on the water bed 62 will now be described with reference to Figs. 9A to 9D.

An array of submersible modules 10 are first towed to a suitable location for deployment as shown in Fig. 9A. Tethers 66 are then deployed to anchoring points 68 on the water bed 62.

The vent plates 18 are now hinged open and the ballast hull sections 36 are flooded with the surrounding water. Each module 10 therefore begins to sink toward the water bed 62 guided by the tethers 66. Again, the opened vent plates 18 provide additional stabilisation during the descent and also increase the speed of descent in a controllable manner by reducing resistance and "parachuting" effects.

Referring to Fig. 9C once the array is at our near the water bed 62, the vent plates 18 are closed and the module enters an installed mode. A turbine module maintenance tether 70 may remain extending to the surface 60. Referring to Fig. 9D, the turbine module 30 may be released from the module 10 on the tether 70 when maintenance or repair is required.

The skilled reader will appreciate that the multi-hull configuration of the apparatus, in combination with the vent plates and buoyancy towers, allow the apparatus to be ballasted down quickly (within minutes), independently and remotely without causing instability of the system which would otherwise threaten the (expensive) payload. The apparatus is designed to ballast down very quickly by pumping water into the port and starboard ballast hulls. This causes the main hull to sink quickly towards the seabed. For installation, the vent plates are fully opened to allow water to pass through the hull. However, when the ballast hulls are filled, the platform would lose its positive stability if it wasn't for the buoyancy towers which provide essential buoyancy, high up in the structure, from the entrained air within. The buoyancy towers also slow the dive to a stop just prior to landing on the water bed. At that point, remotely controlled valves can be opened to release the air from the buoyancy towers in order to achieve a controlled touch-down on the water bed and the required on-bottom weight.

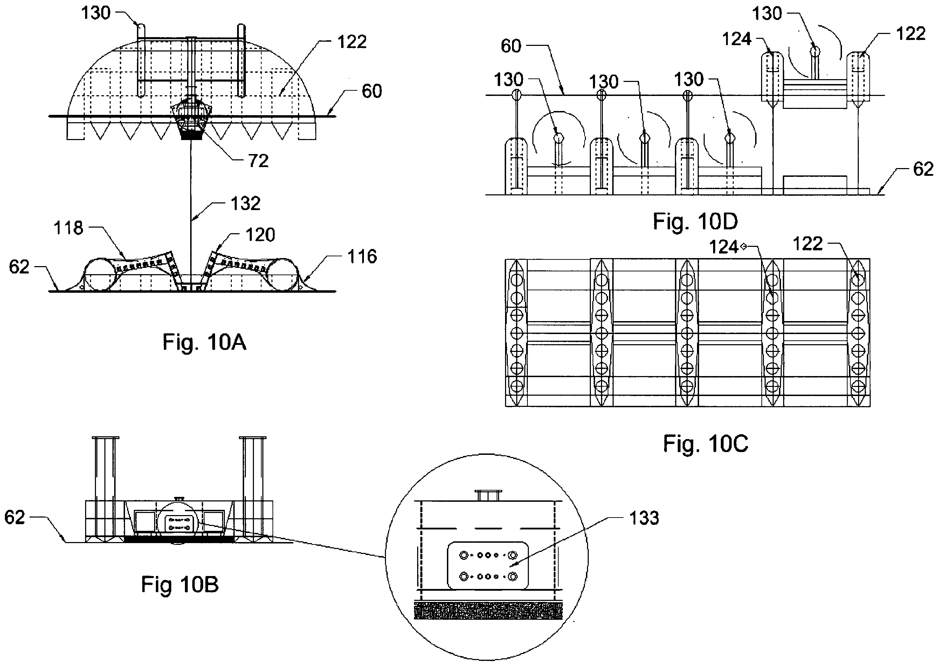

Referring to Fig. 10A to 10D an alternative embodiment of the submersible apparatus will now be described. In order to minimise repetition, similar features are numbered with a common two-digit reference numeral and are differentiated by a third digit placed before the two common digits. Such features are structured similarly, operate similarly, and/or have similar functions unless otherwise indicated.

Each module 110 of the submersible apparatus is typically connected to a series of additional modules to form an array. Each module 110 is provided with boundary layer fairings on either side of the module 110, each boundary layer fairing comprising a scour plate 116 leading on to a vent plate 118. Main hull plates 120 are also provided between the two opposed sets of vent plates 118.

As shown in Fig. 10D, a first buoyancy tower 122 is mounted on one side of the end module 110 and a second buoyancy tower 124 is mounted on the other side of the module 110. The buoyancy towers 122, 124 are substantially hollow to provide variable buoyancy to each module 110 as will be described subsequently.

Detachable underwater turbine modules 130 are also provided. The turbine modules 130 are provided with a universal connection 72 which connects with the main module 110 in a similar fashion to that previously described. As best illustrated in Figs. 10A and 10D, the turbine modules 130 are integrated *with* the buoyancy towers 122, 124 such that when released from the module 110 the buoyant towers 122, 124 will lift the turbine module 130 to the surface. Although horizontal axis turbines are illustrated in Figs. 10A to 10D these could be replaced with virtually any form of underwater renewable energy device.

Therefore in operation, when it is desired to release a module 110 to the surface for maintenance or other operations, the universal connection 72 and interface panels 133 (Fig. 10B) are remotely unlocked from the module 110 to allow the buoyant towers 122, 124 to lift turbine module 130 to the surface. A tether 132 may remain attached to the turbine module 130 to allow straightforward redeployment and engagement with the apparatus 110 after servicing.

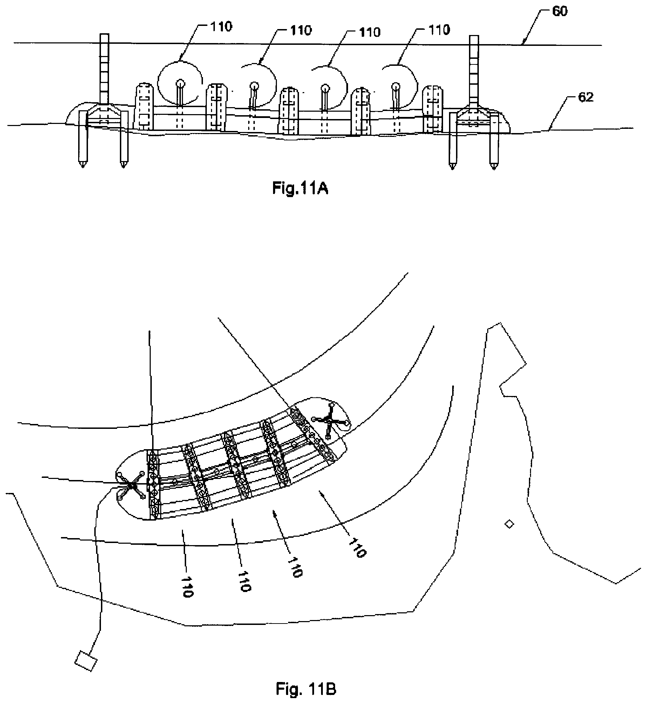

Since the array of modules 110 effectively form a relatively long platform it is unlikely to sit flat on a contoured, rigid water bed. If desired, the modules 110 can therefore be allowed to articulate to accommodate differences in depth to follow the contour of a surrounding feature, such as a bay. The submersible apparatus modules 110 according to the second embodiment of the invention may therefore be arranged in an "articulated" array where each module 110 can adopt a different position on the water bed 62 than its neighbouring module. As shown in Fig. 11A, this allows the articulated array to take account of an uneven water bed 62. As shown in Fig. 11B, in addition to this vertical articulation, the modules 110 are able to articulate laterally to take account of features (such as bays) in the surrounding environment. This allows the apparatus to change its frontal profile to take account of wave refraction into e.g. a large bay.

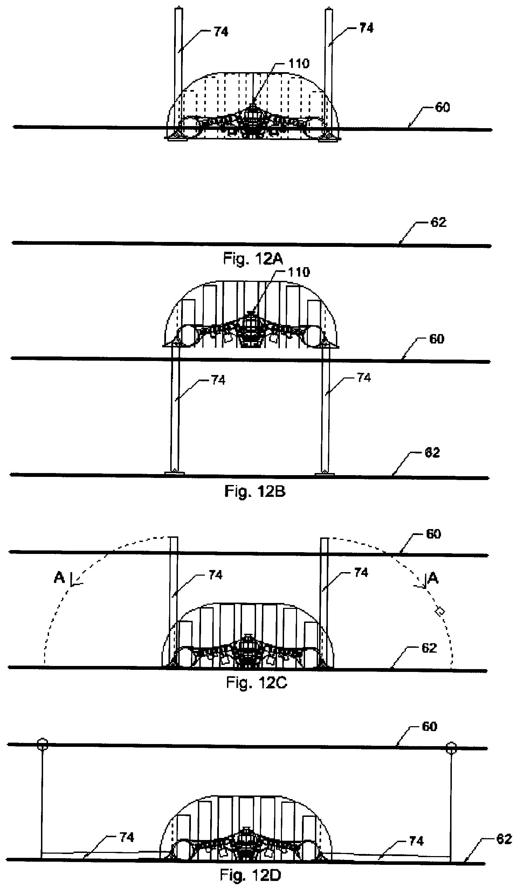

Alternatively, the modules 110 may be provided without the articulating capability previously described; thereby providing a relatively rigid submersible platform. In this configuration, with reference to Figs. 12A to 12D, a pair of self levelling legs 74 may be attached to the frame of the module 110. When the modules 110 are in a transit mode, the legs 74 are in a raised configuration. When the modules 110 are over an appropriate deployment location, the legs 74 are lowered into the water until they make contact with the water bed 62 (Fig. 12B). In addition, the modules 110 can be jacked-up clear of the water allowing them to sit in a perfectly stable condition whilst experiencing the full strength of e.g. a spring tide.

As shown in Fig. 12C, the modules 110 can then be wound down on the legs 74 until they rest on the water bed 62. The legs 74 can then be lowered onto the water bed 62 by pivoting in the direction indicated by arrows A in Fig. 12C. The legs therefore lie on the water bed surface 62 thereby providing anchoring attachment thereto. Pins or other additional securing means may be provided to improve engagement between the flattened legs 74 and the water bed 62 (this provides additional resistance against sliding on the water bed 62).

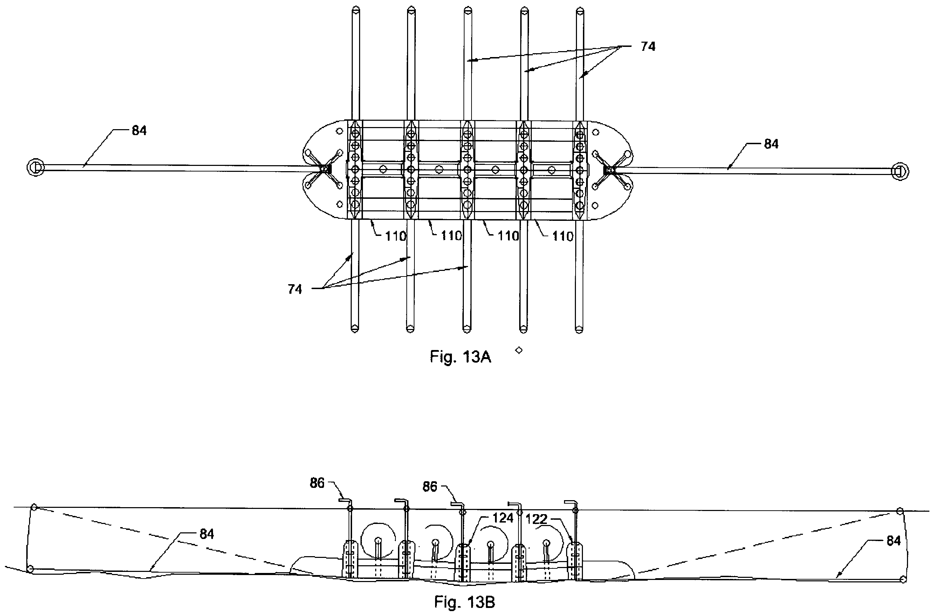

Furthermore, as shown in Fig. 13A and 13B, the legs 74 may be integrated with a de-ballasting arrangement for the turbine modules 130. In this embodiment, ballast pipes 86 extend between the surface and the buoyancy towers 122, 124.

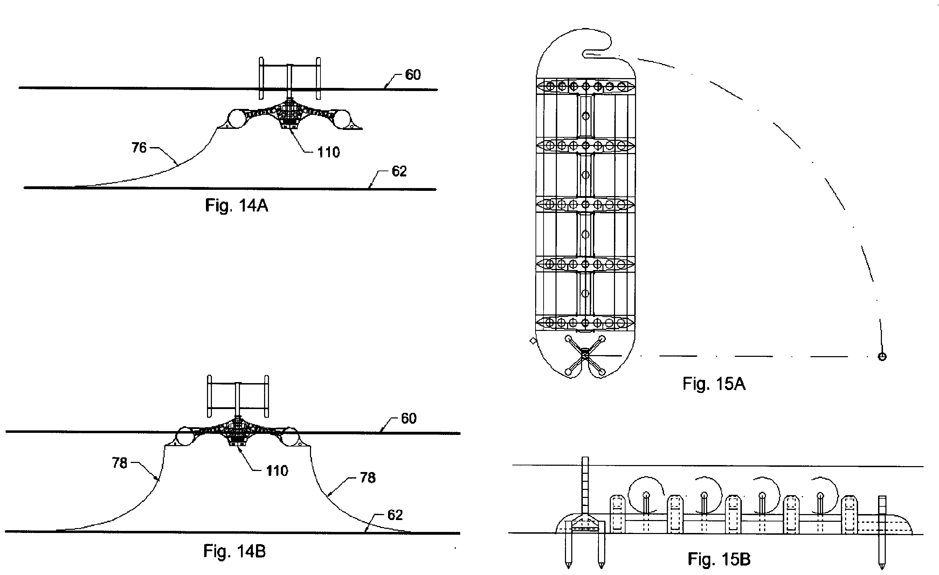

As shown in Figs 14A and 14B, an alternative mooring method utilising mooring lines may be utilised. In Fig. 14A, a single catenary 76 can be used to "fly" the array of modules 110 to the water bed 62. Alternatively, a pair of catenaries 78 may be tensioned in order to draw the array of modules 110 down towards the water bed 62. In taking on-board progressively more anchor chain from the catenaries, each module 110 becomes heavier, thereby increasing the rate of descent to the water bed.

With reference to Fig. 15A, a swing lock system has a first pile arrangement 80 which provides a position lock for the bow section of the array and a second pile arrangement 82 which provides a position lock for the stern section of the array. The bow pile 80 allows the array of modules to weather vane or otherwise swing through 360 degrees when floating at the surface 60. The stern pile 82 is submerged with either a tethering or telescopic arrangement to draw the stern of the array into position. Once the array has been swung into position at slack water it is then guided down to the water bed 62 by these piles 80, 82. This improves stability, provides accurate positioning on the water bed 62 and allows services to be run through the piles. The piles may alternatively be gravity based and constructed as part of the bow and stern modules such that they can travel out to the site and then be positioned accurately and released from the array to provide a temporary mooring system.

The apparatus and methods previously described provide numerous advantages, including but not limited to the following:-

Improvements in efficiency because:
- The boundary layer fairing reduces the effect of the boundary layer by accelerating the flow near to the water bed, thereby improving the inflow conditions into the turbine units;
- Very high yield or power output per unit area of water bed since the submersible apparatus, boundary layer fairing and buoyancy towers reduce turbulent forces allowing many modules to be located very close together;
- The modules carry the large heavy transformers on-board in order to step-up the power generated by the turbines to the most suitable specification for transmission and connection to the national grid.

Reduction in installation costs because:
- The ability to simultaneously install multiple renewable devices saves a huge amount of money;
- Commissioning and testing are performed alongside or in-dock improving health and safety and reducing the likelihood of failures whilst in service;
- The array can be deployed very rapidly from the shipyard by tugs that are commonly available at reasonable day rates;
- The array is self-installing and only requires the most limited support from tugs;
- The array can be installed very rapidly, within minutes, using its ballasting system. This allows greater flexibility and reliability in the scheduling of installation. The assurance of reliable and rapid deployment of the complete system saves time at sea which is very expensive;
- The submersible apparatus is a self-supporting structure that is equally stable on the water bed as it is on the water surface and doesn't require mooring or transmission lines to be pre-laid. Therefore expensive drilling and cable lay vessels are not required.
- The submersible apparatus modules allow the structure to be tailored to individual sites, in terms of number of units to be connected together, which reduces the unit costs through the economies of scale;

Reduction in maintenance costs because:
- Improved reliability is achieves since all major electrical and mechanical parts are contained within a non-corrosive air-tight environment;
- By allowing rapid recovery of the turbine modules, which detach themselves from the submersible apparatus and rise under their own buoyancy to the surface. They can then be detached and towed ashore where maintenance can be carried out in a safer environment ashore.

Reducing the effects on the environment because:
- There is a negligible visual impact of the submersible apparatus since it is located on the water bed. The only visible sign of its presence are the buoys marking the position of the platform;
- The scour plates reduce the scouring of the seabed;
- The boundary layer fairing creates a sheltered environment that allows aquatic life to flourish;
- Electro-magnetic signatures are controlled using specialised hull claddings with a net benefit being reduced corrosion levels. This is further enhanced by careful selection of materials and hull claddings reducing the requirement for palliatives;

Improving aquatic life in the area:
- The shelter provided by the modules allows aquatic life to flourish;
- Strong tidal mixing provides the nourishment required for the whole aquatic food chain;
- Decommissioning costs are minimised since the submersible apparatus can be rapidly ballasted to bring the apparatus to the surface, disconnected from the electrical grid connection and towed back to port for refit or dismantling.
- The main hull supports many different types of renewable energy device given the flexibility of its payload capacity where the pressure hull provides a corrosive free environment.

Improved Health & Safety achieved by:
- All the major assembly and maintenance work is performed onshore in a safer dockyard environment;
- All operations are performed remotely from an offshore support ship or by ROVs utilising the hydroways. The requirement for divers to assist installation is removed;
- The risk from ships navigating in and around the installation site is much lower because there is a clearance draught provided for all shipping in the area which allows them to pass safely over the top of the system.

Although particular embodiments of the invention have been disclosed herein in detail, this has been done by way of example and for the purposes of illustration only. The aforementioned embodiments are not intended to be limiting with respect to the scope of the appended claims.

It is contemplated by the inventor that various substitutions, alterations, and modifications may be made to the invention without departing from the spirit and scope of the invention as defined by the claims. For example:-
Instead of the abutting flat faces on each buoyancy tower, alternative arrangements may be provided to locate the buoyancy tower of one module to that of another module. This could include, for example, and interlocking or other engagement mechanism.

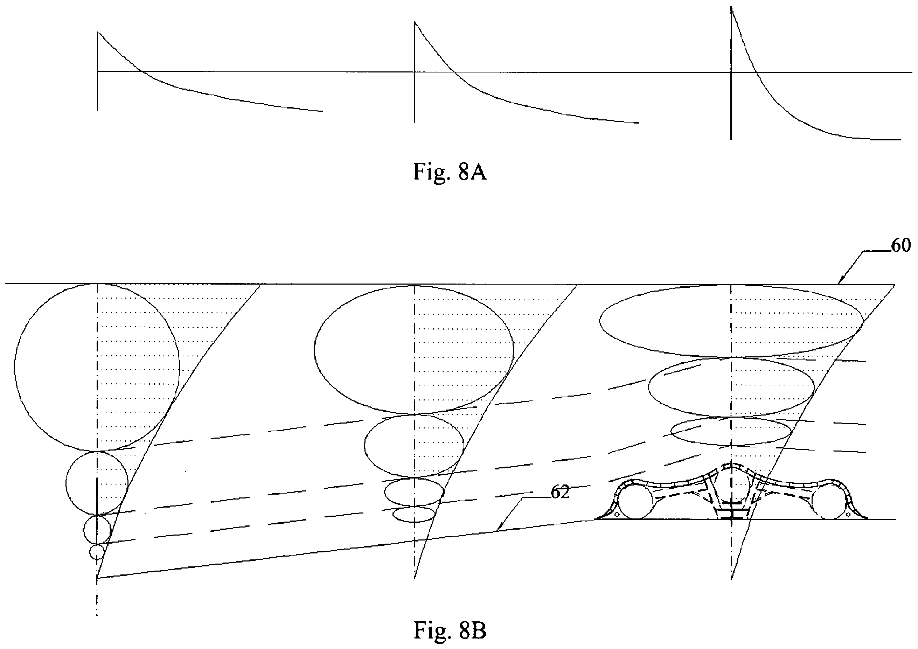

Although the above embodiments are mainly concerned with providing a support for a tidal turbine device, the modules and array may be used in alternative applications. For example, and with reference to Figs. 8A and 8B, it could be deployed as a man-made reef to protect receding shorelines. In this regard, where deep water waves have an oscillatory motion, as the waves approach the shoreline their oscillations start to squash into ellipses, thereby increasing the displacement of the water particles from the mean and increasing the wave front speed, causing the wave to steepen. Ultimately, when the wave comes into contact with the array it will squash the oscillations even further, increasing the wave front speed and causing it to steepen by a sufficient degree so as cause the wave to break; thereby imparting maximum lateral motion.

Furthermore, the apparatus of the present invention may be used in the place of foundations for other structures such as new bridges.

## Claims

1. A submersible module (10) adapted to anchor equipment with respect to a water flow passing over a water bed, the module (10) comprising:-
a base member for attaching the equipment thereto, which base member comprises a ballast arrangement to enable the module (10) to be ballasted between the water surface and the water bed; and
a boundary layer fairing adapted to divert a boundary layer component of the water flow over at least a portion of the module (10), thereby accelerating the boundary layer water flow over the module (10),**characterised in that**:
the ballast arrangement comprises a buoyancy tower (22), wherein the buoyancy tower (22) is configured for integration with a turbine module (30) such that the turbine module may be raised and lowered with the buoyancy tower (22).

2. A submersible module (10) according to claim 1, further comprising a vent plate (18) provided at the boundary layer fairing, and wherein the vent plate (18) is adapted to reduce turbulence in the water flow passing over the module (10).

3. A submersible module (10) according to claim 2, wherein the vent plate (18) is selectively actuable between a closed configuration and an open configuration.

4. A submersible module (10) according to any preceding claim, wherein at least of the portion of the module (10) is pivotable in order to facilitate descent of the module (10) into the water.

5. A submersible module (10) according to any preceding claim, wherein a boundary layer fairing is provided at the leading and trailing edge of the module (10) such that the boundary layer water flow is accelerated over the module (10) regardless of the water flow direction.

6. A submersible module (10) according to any preceding claim, further comprising a turbine module (30) provided with a docking arrangement to allow selective attachment to the submersible module (10).

7. A submersible module (10) according to any preceding claim, wherein the ballast arrangement comprises a pair of ballast hull sections provided toward either edge of the module (10).

8. A submersible module (10) according to any preceding claim, which comprises a first buoyancy tower (22) mounted on one side of the module (10) and a second buoyancy tower (24) mounted on the other side of the module (10).

9. A submersible module (10) according to any preceding claim, wherein the or each buoyancy tower (22,24) is substantially hollow to provide variable buoyancy.

10. A submersible module (10) according to any preceding claim, wherein the buoyancy tower (22) or buoyancy towers (22,24) provide a relatively high centre of buoyancy.

11. A submersible module (10) according to any preceding claim, wherein the or each buoyancy tower (22,24) is adapted to mate with a corresponding buoyancy tower provided on an adjacent submersible module (10).

12. A submersible module (10) according to any preceding claim, further comprising at least a buoyancy pipe to selectively flood or empty water from the or each buoyancy tower (22,24).

13. An array comprising a plurality of submersible modules (10) according to any preceding claim, wherein each module (10) in the array is arranged laterally with respect to an adjacent module (10).

14. An array according to claim 13, wherein the modules (10) of the array are arranged to provide a substantially hollow sheltered zone (38) underneath the array.

15. An array according to claim 13 or 14, wherein each module (10) of the array is connected with an articulated joint such that the array may be articulated laterally and vertically to compensate for surrounding features of the underwater environment.

16. A method of installing anchoring equipment with respect to a water flow passing over a water bed, the method comprising the steps of providing:-
a submersible module (10) having a base member for attaching the equipment thereto, which base member comprises a ballast arrangement to enable the module (10) to be ballasted between the water surface and the water bed; and
a boundary layer fairing adapted to divert a boundary layer component of the water flow over at least a portion of the module (10), thereby accelerating the boundary layer water flow over the module (10),
**characterised in that**:
the ballast arrangement comprises a buoyancy tower (22), wherein the buoyancy tower (22) is configured for integration with a turbine module (30) such that the turbine module may be raised and lowered with the buoyancy tower (22).

17. The method of claim 16, including the step of ballasting the module (10) by partially flooding portions of the module (10) and guiding the module (10) to a location on the water bed.

18. The method of claim 16 or 17, further comprising connecting together a plurality of modules (10) to form an array, and further comprising articulating the connected modules (10) at least one of vertically and laterally to compensate for variations in water bed depth and contours in the surrounding environment.

19. The method of any one of claims 16 to 18, further comprising connecting together a plurality of modules to form an array and manoeuvring the array of modules on the water surface prior to installation.

20. The method of any one of claims 16 to 18, further comprising deploying several modules independently for connection together in an array of module at or adjacent to the water bed.

## Patentansprüche

1. Tauchfähiges Modul (10), das ausgelegt ist, eine Einrichtung in Bezug auf einen Wasserfluss zu verankern, der über ein Wasserbett strömt, wobei das Modul (10) Folgendes umfasst:
ein Basiselement zum Befestigen der Einrichtung daran, wobei das Basiselement eine Ballastanordnung umfasst, um zu ermöglichen, dass das Modul (10) zwischen der Wasseroberfläche und dem Wasserbett ballastiert ist; und
eine Grenzschichtverkleidung, die ausgelegt ist, eine Grenzschichtkomponente des Wasserflusses über mindestens einen Abschnitt des Moduls (10) abzulenken, wodurch der Grenzschichtwasserfluss über das Modul (10) beschleunigt wird, **dadurch gekennzeichnet, dass**:
die Ballastanordnung einen Auftriebsturm (22) umfasst, wobei der Auftriebsturm (22) zur Integration mit einem Turbinenmodul (30) konfiguriert ist, sodass das Turbinenmodul mit dem Auftriebsturm (22) angehoben und abgesenkt werden kann.

2. Tauchfähiges Modul (10) nach Anspruch 1, weiter umfassend eine Anströmplatte (18), die an der Grenzschichtverkleidung bereitgestellt ist, und wobei die Anströmplatte (18) ausgelegt ist, Turbulenzen in dem Wasserfluss, der über das Modul (10) strömt, zu reduzieren.

3. Tauchfähiges Modul (10) nach Anspruch 2, wobei die Anströmplatte (18) selektiv zwischen einer geschlossenen Konfiguration und einer offenen Konfiguration betätigbar ist.

4. Tauchfähiges Modul (10) nach einem der vorstehenden Ansprüche, wobei mindestens ein Abschnitt des Moduls (10) schwenkbar ist, um das Absenken des Moduls (10) in das Wasser zu ermöglichen.

5. Tauchfähiges Modul (10) nach einem der vorstehenden Ansprüche, wobei eine Grenzschichtverkleidung an der Vorder- und der Hinterkante des Moduls (10) bereitgestellt ist, sodass der Grenzschichtwasserfluss unabhängig von der Wasserflussrichtung über das Modul (10) beschleunigt wird.

6. Tauchfähiges Modul (10) nach einem der vorstehenden Ansprüche, weiter umfassend ein Turbinenmodul (30), das mit einer Andockanordnung versehen ist, um eine selektive Befestigung an dem tauchfähigen Modul (10) zu ermöglichen.

7. Tauchfähiges Modul (10) nach einem der vorstehenden Ansprüche, wobei die Ballastanordnung ein Paar von Ballastrumpfabschnitten umfasst, die an jeder Kante des Moduls (10) bereitgestellt sind.

8. Tauchfähiges Modul (10) nach einem der vorstehenden Ansprüche, das einen ersten Auftriebsturm (22), der an einer Seite des Moduls (10) angebracht ist, und einen zweiten Auftriebsturm (24) umfasst, der an der anderen Seite des Moduls (10) angebracht ist.

9. Tauchfähiges Modul (10) nach einem der vorstehenden Ansprüche, wobei der oder jeder Auftriebsturm (22, 24) im Wesentlichen hohl ist, um einen variablen Auftrieb bereitzustellen.

10. Tauchfähiges Modul (10) nach einem der vorstehenden Ansprüche, wobei der Auftriebsturm (22) oder die Auftriebstürme (22, 24) ein relativ hohes Auftriebszentrum bereitstellen.

11. Tauchfähiges Modul (10) nach einem der vorstehenden Ansprüche, wobei der oder jeder Auftriebsturm (22, 24) ausgelegt ist, mit einem entsprechenden Auftriebsturm zusammenzupassen, der an einem benachbarten tauchfähigen Modul (10) bereitgestellt ist.

12. Tauchfähiges Modul (10) nach einem der vorstehenden Ansprüche, weiter umfassend mindestens ein Auftriebsrohr, um den oder jeden Auftriebsturm (22, 24) selektiv mit Wasser zu fluten oder dieses daraus zu entleeren.

13. Anordnung umfassend eine Mehrzahl von tauchfähigen Modulen (10) nach einem der vorstehenden Ansprüche, wobei jedes Modul (10) in der Anordnung seitlich in Bezug auf ein benachbartes Modul (10) angeordnet ist.

14. Anordnung nach Anspruch 13, wobei die Module (10) der Anordnung angeordnet sind, um eine im Wesentlichen hohle geschützte Zone (38) unterhalb der Anordnung bereitzustellen.

15. Anordnung nach Anspruch 13 oder 14, wobei jedes Modul (10) der Anordnung mit einem Gelenk verbunden ist, sodass die Anordnung seitlich und vertikal gelenkartig bewegt werden kann, um umgebende Merkmale der Unterwasserumgebung zu kompensieren.

16. Verfahren zum Installieren einer Verankerungseinrichtung in Bezug auf einen Wasserfluss, der über ein Wasserbett fließt, wobei das Verfahren die folgenden Schritte umfasst:
Bereitstellen eines tauchfähigen Moduls (10) mit einem Basiselement zum Befestigen der Einrichtung daran, wobei das Basiselement eine Ballastanordnung umfasst, um zu ermöglichen, dass das Modul (10) zwischen der Wasseroberfläche und dem Wasserbett ballastiert ist; und
eine Grenzschichtverkleidung, die ausgelegt ist, eine Grenzschichtkomponente des Wasserflusses über mindestens einen Abschnitt des Moduls (10) abzulenken, wodurch der Grenzschichtwasserfluss über das Modul (10) beschleunigt wird,
**dadurch gekennzeichnet, dass**:
die Ballastanordnung einen Auftriebsturm (22) umfasst, wobei der Auftriebsturm (22) zur Integration mit einem Turbinenmodul (30) konfiguriert ist, sodass das Turbinenmodul mit dem Auftriebsturm (22) angehoben und abgesenkt werden kann.

17. Verfahren nach Anspruch 16, aufweisend den Schritt des Ballastierens des Moduls (10) durch Teilfluten von Abschnitten des Moduls (10) und Führen des Moduls (10) an eine Position auf dem Wasserbett.

18. Verfahren nach Anspruch 16 oder 17, weiter umfassend das Verbinden einer Mehrzahl von Modulen (10) miteinander, um eine Anordnung zu bilden, und weiter umfassend das gelenkartige Bewegen der verbundenen Module (10) mindestens entweder vertikal oder seitlich, um Variationen in der Wasserbetttiefe und Konturen in der Umgebung zu kompensieren.

19. Verfahren nach einem der Ansprüche 16 bis 18, weiter umfassend das Verbinden einer Mehrzahl von Modulen miteinander, um eine Anordnung zu bilden, und Manövrieren der Anordnung von Modulen auf der Wasseroberfläche vor der Installation.

20. Verfahren nach einem der Ansprüche 16 bis 18, weiter umfassend das Positionieren mehrerer Module unabhängig voneinander zur Verbindung miteinander in einer Anordnung von Modulen an oder benachbart zu dem Wasserbett.

## Revendications

1. Module submersible (10) adapté pour ancrer un équipement par rapport à un flux d'eau passant sur un lit d'eau, le module (10) comprenant : -
un élément de base pour l'attache de l'équipement à celui-ci, lequel élément de base comprend un agencement de ballast pour permettre au module (10) d'être ballasté entre la surface d'eau et le lit d'eau ; et
un carénage de couche limite adapté pour détourner un composant de couche limite du flux d'eau sur au moins une portion du module (10), accélérant ainsi le flux d'eau de couche limite sur le module (10), **caractérisé en ce que** :
l'agencement de ballast comprend une tour de flottabilité (22), dans lequel la tour de flottabilité (22) est configurée pour l'intégration avec un module de turbine (30) de sorte que le module de turbine puisse être relevé et abaissé avec la tour de flottabilité (22).

2. Module submersible (10) selon la revendication 1, comprenant en outre une plaque de ventilation (18) prévue sur le carénage de couche limite, et dans lequel la plaque de ventilation (18) est adaptée pour réduire la turbulence dans le flux d'eau passant sur le module (10).

3. Module submersible (10) selon la revendication 2, dans lequel la plaque de ventilation (18) est sélectivement actionnable entre une configuration fermée et une configuration ouverte.

4. Module submersible (10) selon une quelconque revendication précédente, dans lequel au moins la portion du module (10) peut pivoter afin de faciliter la descente du module (10) dans l'eau.

5. Module submersible (10) selon une quelconque revendication précédente, dans lequel un carénage de couche limite est prévu sur l'arête avant et arrière du module (10) de sorte que le flux d'eau de couche limite soit accéléré sur le module (10) en dépit de la direction de flux d'eau.

6. Module submersible (10) selon une quelconque revendication précédente, comprenant en outre un module de turbine (30) doté d'un agencement d'amarrage pour permettre l'attache sélective au module submersible (10).

7. Module submersible (10) selon une quelconque revendication précédente, dans lequel l'agencement de ballast comprend une paire de sections d'enveloppe de ballast prévues vers l'une ou l'autre de l'arête du module (10).

8. Module submersible (10) selon une quelconque revendication précédente, qui comprend une première tour de flottabilité (22) montée sur un côté du module (10) et une seconde tour de flottabilité (24) montée sur l'autre côté du module (10).

9. Module submersible (10) selon une quelconque revendication précédente, dans lequel la ou chaque tour de flottabilité (22, 24) est sensiblement creuse pour fournir une flottabilité variable.

10. Module submersible (10) selon une quelconque revendication précédente, dans lequel la tour de flottabilité (22) ou les tours de flottabilité (22, 24) fournissent un centre relativement élevé de flottabilité.

11. Module submersible (10) selon une quelconque revendication précédente, dans lequel la ou chaque tour de flottabilité (22, 24) est adaptée pour s'accoupler avec une tour de flottabilité correspondante prévue sur un module submersible adjacent (10).

12. Module submersible (10) selon une quelconque revendication précédente, comprenant en outre au moins un tuyau de flottabilité destiné sélectivement à inonder ou vider l'eau de la ou chaque tour de flottabilité (22, 24).

13. Agencement comprenant une pluralité de modules submersibles (10) selon une quelconque revendication précédente, dans lequel chaque module (10) dans l'agencement est agencé latéralement par rapport à un module adjacent (10).

14. Agencement selon la revendication 13, dans lequel les modules (10) de l'agencement sont agencés pour fournir une zone protégée sensiblement creuse (38) sous l'agencement.

15. Agencement selon la revendication 13 ou 14, dans lequel chaque module (10) de l'agencement est raccordé à un joint articulé de sorte que l'agencement puisse être articulé latéralement et verticalement pour compenser des propriétés alentours de l'environnement sous-marin.

16. Procédé d'installation d'un équipement d'ancrage par rapport à un flux d'eau passant sur un lit d'eau, le procédé comprenant les étapes de fourniture de : -
un module submersible (10) présentant un élément de base pour l'attache de l'équipement à celui-ci, lequel élément de base comprend un agencement de ballast pour permettre au module (10) d'être ballasté entre la surface d'eau et le lit d'eau ; et
un carénage de couche limite adapté pour détourner un composant de couche limite du flux d'eau sur au moins une portion du module (10), accélérant ainsi le flux d'eau de couche limite sur le module (10),
**caractérisé en ce que** :
l'agencement de ballast comprend une tour de flottabilité (22), dans lequel la tour de flottabilité (22) est configurée pour l'intégration avec un module de turbine (30) de sorte que le module de turbine puisse être relevé et abaissé avec la tour de flottabilité (22).

17. Procédé selon la revendication 16, incluant l'étape de ballastage du module (10) par l'inondation partielle des portions du module (10) et le guidage du module (10) vers un emplacement sur le lit d'eau.

18. Procédé selon la revendication 16 ou 17, comprenant en outre le raccordement ensemble d'une pluralité de modules (10) pour former un agencement, et comprenant en outre l'articulation des modules raccordés (10) au moins un parmi verticalement et latéralement pour compenser des variations dans la profondeur et les contours de lit d'eau dans l'environnement alentour.

19. Procédé selon l'une quelconque des revendications 16 à 18, comprenant en outre le raccordement ensemble d'une pluralité de modules pour former un agencement et la manoeuvre de l'agencement des modules sur la surface d'eau avant l'installation.

20. Procédé selon l'une quelconque des revendications 16 à 18, comprenant en outre le déploiement de plusieurs modules indépendamment pour le raccordement ensemble dans un agencement de module sur ou de manière adjacente au lit d'eau.
